(19) Europäisches Patentamt

European Patent Office

Office européen des brevets

(11) **EP 3 009 673 A1**

(12) **EUROPEAN PATENT APPLICATION**

(43) Date of publication:
20.04.2016 Bulletin 2016/16

(51) Int Cl.:
*F03D 13/00* (2016.01)   *F03D 7/02* (2006.01)

(21) Application number: 14189066.5

(22) Date of filing: 15.10.2014

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(71) Applicant: **Siemens Aktiengesellschaft**
**80333 München (DE)**

(72) Inventors:
• **Jensen, Dennis Soebye**
**7400 Herning (DK)**
• **Madsen, Finn Daugaard**
**7190 Billund (DK)**
• **Rieper, Johnny**
**8700 Horsens (DK)**

(54) **OPERATING A WIND TURBINE DURING STANDSTILL, INVOLVING PARTICULARLY THE DETECTION OF ROTOR BLADES ICING**

(57)   A method is proposed to operate a wind turbine (100) during standstill, comprising the steps
- determining an actual blade edge frequency (311, 412) of at least one rotor blade (135) during standstill of the wind turbine (100),
- comparing the determined blade edge frequency (311, 411) with a predetermined reference frequency (323),

- monitoring a change of mass of at least one of the at least one rotor blade (135) based on the result of the comparing.

   Further, a wind turbine, a control device, a computer program product and a computer readable medium are suggested.

FIG 3A

**Description**

The invention relates to a method and to a control device to operate a wind turbine during standstill. In addition, a wind turbine, a computer program product and a computer readable medium are suggested.

Wind turbines located at sites with cold and harsh weather conditions are exposed to a risk of ice which might build up on the blades ("ice-accretion") of the wind turbines. As a consequence, aerodynamic-characteristics of the blades deteriorate significantly thereby causing reduced output-power of the wind turbine.

Some wind turbines are equipped with a de-icing system removing at least a part of the ice.

The detection of ice or icing or ice-accretion ("ice-detection") is a necessary feature for wind turbines to control the de-icing system.

Even for wind turbines without a de-icing system an ice-detection would be useful to explain situations, e.g., with bad or insufficient power curves or wind turbines failing to cut in.

[WO2011/127990] relates to a method for determining a mass change at a rotating blade of a wind turbine during operation. Thereby, the method as disclosed is based on a blade edge frequency estimation which is only applicable if the respective pitch of the blade is below, e.g., 10 degrees and while the rotor is in rotation, i.e. the rotational speed is higher than 5 rpm (revolutions per minute).

By applying actual solutions for determining a mass change at rotor blades it is not possible to determine an icing or ice-accretion on the blades of a wind turbine during standstill.

The object is thus to overcome such disadvantage and to provide an improved approach for a wind turbine to determine icing on a blade in particular during standstill of a wind turbine.

This problem is solved according to the features of the independent claims. Further embodiments result from the depending claims.

In order to overcome this problem, a method is provided to operate a wind turbine during standstill, comprising the steps

- determining an actual blade edge frequency of at least one rotor blade during standstill of the wind turbine,
- comparing the determined blade edge frequency with a predetermined reference frequency,
- monitoring a change of mass of at least one of the at least one rotor blade based on the result of the comparing.

The actual blade edge frequency may comprise a quantity or a value.

Standstill means a wind turbine being stopped or almost stopped, i.e. without any rotation speed or with very low rotation speed. Standstill includes also a wind turbine during idling, i.e. with a pitch angle which causes the wind turbine to enter the non-operative mode or standstill mode - "pitch to stop".

The predetermined reference frequency may be a value or quantity of a blade edge frequency determined or calculated or estimated before applying the proposed solution. Thereby, the reference frequency may be based on results of a mathematical model or may be based on experience or may be the result of an analysis of recorded data (e.g. based on an average value of the recorded data) representing operational characteristics of a wind turbine.

Comparing may be any possible mathematical or logical assignment between the determined actual blade edge frequency and the predetermined reference frequency.

A blade edge frequency may be a vibration frequency like, e.g., a number of oscillations per time of the blade in edgewise direction. The blade may oscillate according to a combination of oscillation modes wherein the frequency representative of the vibration frequency of the rotor blade may comprise or may be that frequency of the blade which has the largest amplitude. Thereby, the actual oscillation or vibration of the blade may comprise a complex pattern of vibration modes along different directions of the blade, such as along the longitudinal direction, along the transverse direction and along a direction between the longitudinal and the transverse direction. Thus, the frequency associated with the blade may be representative for a ground frequency of the blade, in particular the blade edge. The blade edge may be a leading edge (facing the wind direction) or a trailing edge.

A mass change may indicate that material was added or attached to the blade or that material was removed from the blade. In particular, the material attached to the blade or removed from the blade may comprise soil, dust, water, ice or a mechanical component such as a bolt or any other material.

Monitoring a change of mass based on the determination of the blade edge frequency during standstill of the wind turbine allows the configuration of a simple and robust monitoring and control system which can be implemented in all existing or future wind turbines.

In an embodiment, the result of the comparing is based on a determined difference between the actual blade edge frequency and the reference frequency and the change of mass is determined if the difference exceeds a definable threshold.

In another embodiment, the actual blade edge frequency is determined based on sensing vibrations of the wind turbine.

The measured or sensed vibrations may for example comprise an acceleration, an oscillation, a movement, a lateral movement, a vertical movement, a rotational movement of the wind turbine, in particular sensed at a particular location at the wind turbine, such as at the wind turbine tower, at the nacelle of the wind turbine, at the hub of the wind turbine, or at a rotor blade of the wind turbine. The sensing of vibrations may comprise measuring the vibration over a certain time period, such as by sampling the vibration at particular time steps. The sensing may comprise measuring the vibration by an analogue device and/or digital device. The sensing may comprise sensing and/or detecting and/or acquiring and/or transforming the vibration using an appropriate sensor being responsive to an acceleration, deflection, movement, or oscillation of the wind turbine, in particular the nacelle of the wind turbine. In particular, the vibration of the wind turbine may occur along different directions, wherein the vibration of the wind turbine in the different directions may be measured using one or more sensors which may in particular output signals representing the vibration of the wind turbine along these different directions. Further, measuring the vibration may be more suited for detecting a mass change if it is filtered, in particular it may be preferable to use the averaged value.

In a further embodiment, the actual blade edge frequency is determined based on a frequency analysis of the sensed vibrations.

The frequency analyses may be based on a Fast Fourier Transformation (FFT) or on an inverse Fast Fourier Transformation or on a combination thereof.

In a next embodiment, the at least one rotor blade is essentially pitched to a stop position, and the sensing of vibrations is based on measurements of an accelerometer arranged at a component of the wind turbine.

When a wind turbine is stopped or almost stopped, the rotor blades are usually pitched out ("pitched to stop"), e.g., to approximately 82 degree. As a consequence, the vibrations of the at least one rotor blade according to the blade edge frequency are now affecting the tower fore-after acceleration. Thereby, the measured accelerations of the tower or the nacelle may be a resulting acceleration originating from the at least one rotor blade. In particular, if a blade is stopped in vertical direction it should be dominating. Further, a rotor blade pointing in the vertical direction, i.e. upwards, may excite the tower easier as the angel between the tower and the rotor blade is almost zero.

According to an optional embodiment, the wind turbine is stopped in a way that the same rotor blade points towards the vertical direction. This enables a better predetermination of the reference frequency as it can be determined with high precision based on a more precise algorithm (e.g. using the same mathematical arguments or constraints) configured or designed for certain rotor blade instead of, e.g., determining an average value based on a number of rotor blades or recorded data.

The component can be central component of the wind turbine like, e.g., the nacelle or tower.

It is also an embodiment that the sensing of vibrations is based on sensing strain in an edgewise direction and/or flap-wise direction at at least one of the at least one rotor blade.

Sensing strain may be implemented by a strain gauge sensor usually being part of the blade.

Pursuant to another embodiment, an increase of mass of the at least one rotor blade is determined if the determined actual blade edge frequency is smaller than reference frequency.

According to an embodiment, the increase of mass is caused by an accretion of ice covering at least a part of the at least one rotor blade.

According to another embodiment, the accretion of ice is determined if an ambient air temperature of the wind turbine is below a predetermined value.

In yet another embodiment, a deicing of at least a part of the at least one rotor blade after determination of the accretion of ice is performed.

A next embodiment comprises the steps of

- determining the actual blade edge frequency of the at least one rotor blade during the deicing,
- stopping the deicing if no further substantial change of the actual blade edge frequency is determined.

According to an advanced embodiment, the deicing is stopped if no further change of the actual blade edge frequency is determined within a definable time period.

Pursuant to yet an embodiment, a pitch offset at the at least one rotor blade may be applied after the determination of the accretion of ice.

The problem stated above is also solved by a wind turbine comprising a processing unit that is arranged for

- determining an actual blade edge frequency of at least one rotor blade during standstill of the wind turbine,
- comparing the determined blade edge frequency with a predetermined reference frequency,
- monitoring a change of mass of at least one of the at least one rotor blade based on the result of the comparing.

The problem stated supra is also solved by a control device comprising and/or being associated with a processor unit and/or hard-wired circuit and/or a logic device that is arranged such that the method as described herein is executable thereon.

It is noted that said processor unit can comprise at least one, in particular several means that are arranged to execute the steps of the method described herein. The means may be logically or physically separated; in particular several logically separate means could be combined in at least one physical unit.

Said processor unit may comprise at least one of the following: a processor, a microcontroller, a hard-wired circuit, an ASIC, an FPGA, a logic device.

The solution provided herein further comprises a computer program product directly loadable into a memory of a digital computer, comprising software code portions for performing the steps of the method as described herein.

In addition, the problem stated above is solved by a computer-readable medium, e.g., storage of any kind, having computer-executable instructions adapted to cause a computer system to perform the method as described herein.

Embodiments of the invention are shown and illustrated in the following figures:

Fig.1    shows a schematically side view of an exemplary embodiment of a wind turbine;

Fig.2    visualizes an exemplary embodiment of a rotor blade;

Fig.3A,B    show several graphs representing an exemplary measurement scenario monitoring a rotor blade;

Fig.4A,B    illustrate several corresponding graphs representing a further exemplary measurement scenario monitoring the same wind turbine monitored in the scenario of Fig.3A,B;

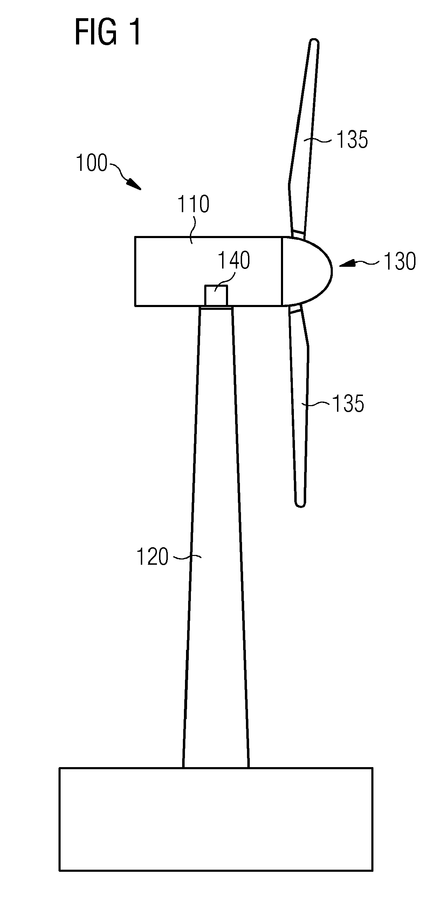

**Fig.1** shows a schematically side view of an exemplary embodiment of a wind turbine 100 comprising a nacelle 110 being rotatable mounted on top of a tower 120. A rotor 130 is attached to an upwind side of the nacelle 110. The rotor 130 includes a central rotor hub and a plurality of rotor blades 135 mounted to and extending radially from the rotor hub defining a rotor plane.

According to one possible embodiment of the proposed solution, an accelerometer 140 is located in the nacelle 110 for sensing vibrations of the nacelle 110 originating from the vibrations of one or more of the rotor blades 135 propagating down to the tower 120. Thereby, the accelerometer 140 senses the vibrations in two directions, i.e. transverse the nacelle (x-wise, side-side) and along the nacelle (y-wise, fore-after). Due to its central location on top of the wind turbine the accelerator 140 may provide a measurement signal based on a superimposition or superposition or overlap of propagating vibrations originating from different rotor blades 135.

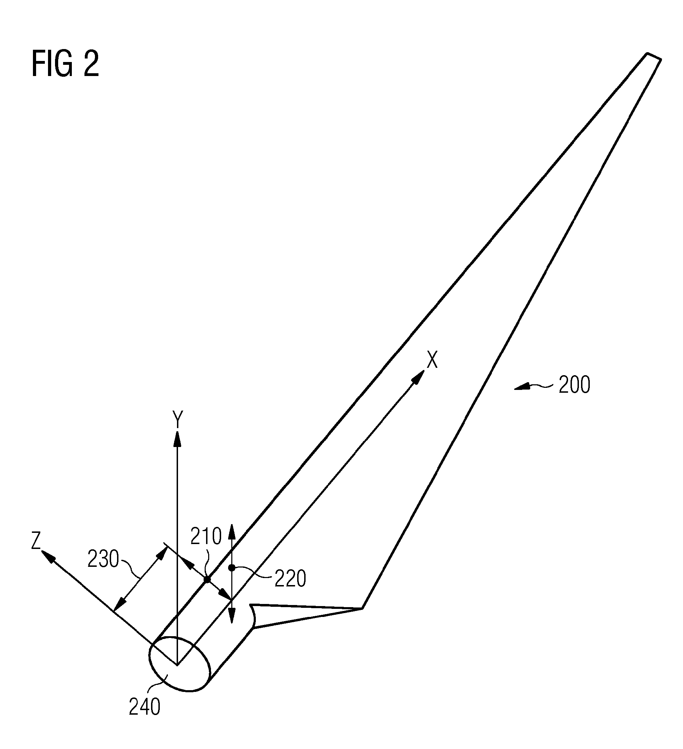

Alternatively, instead of an accelerometer located in the nacelle 110, strain gauge sensors implemented within at least one rotor blade may be used for sensing the vibrations of the blade in edgewise and/or flap direction. **Fig.2** visualizes an exemplary embodiment of a blade 200 with a first strain gauge sensor 210 sensing edge-wise vibrations of the blade (z-direction) and with a second strain gauge sensor 220 sensing flap-wise vibrations of the blade (y-direction). As an example, both sensors 210, 220 are implemented in the blade 200 with a distance 230 from a root 240 of the blade 200. The distance 230 may be, e.g., in a range between 4 to 10 meters from the root 240.

Thereby, a frequency extracted from the measurement signal provided by the first strain gauge sensor 210 sensing the edge-wise vibrations of the rotor blade 200 is representing the blade edge frequency of the rotor blade 200.

In the following, the proposed solution will be explained in more detail:

One aspect of monitoring or observing the blade edge frequency of one or several rotor blades during standstill of a wind turbine is the fact that the blade edge frequency of a rotor blade during standstill is higher than during operation. As an example, based on experience and analysis of long-term operation data of a wind turbine, the blade edge frequency of a rotor blade with a certain length during operation has a value of about 1.22 Hz compared to a value of about 1.28 Hz during standstill.

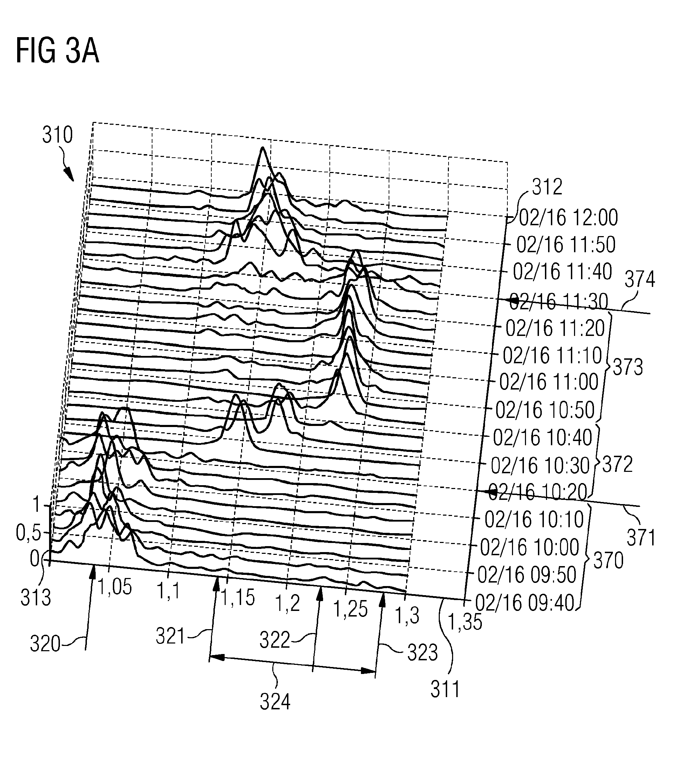

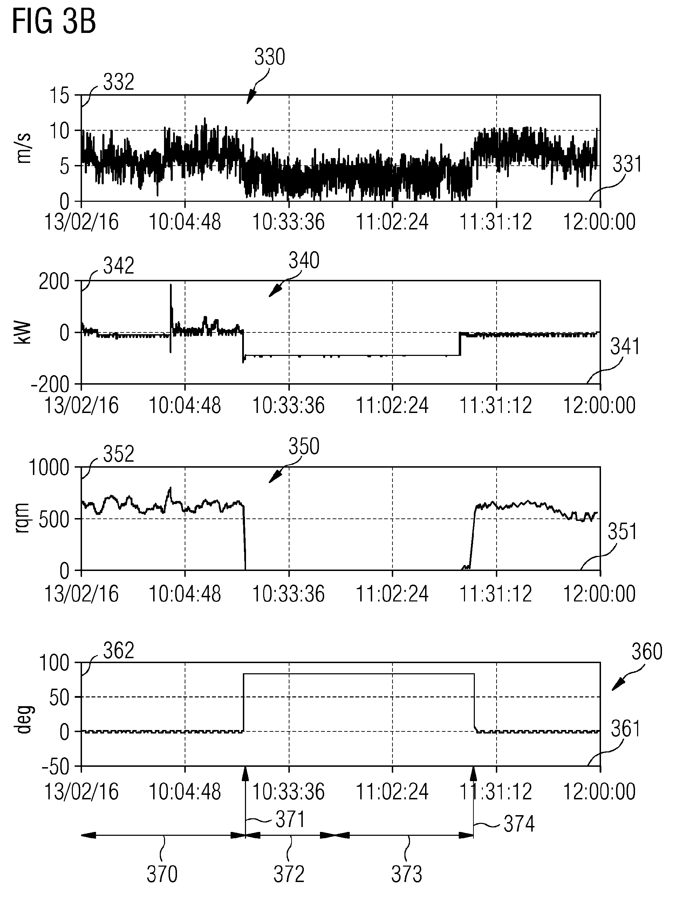

**Fig.3A and Fig.3B** both show several graphs representing an exemplary measurement scenario monitoring a rotor blade with a certain length at least partly covered with ice during operation of a wind turbine with different operation modes.

Thereby, a graph 310 of Fig.3A illustrates a frequency spectrum based on a measurement signal provided by a strain gauge sensor implemented in the rotor blade and sensing the vibrations of the rotor blade in the edgewise direction regardless of a pitch angle. An abscissa 311 represents the derived blade edge frequency, an ordinate 312 represents a progressing monitoring time being relevant for the measurement scenario and a further axis 313 represents a Signal-to-Noise ratio (SNR) based on the derived signal.

An ordinate 332 of a further graph 330 of Fig.3B represents an actual wind speed [m/s] being relevant for the measurement scenario.

An ordinate 342 of a graph 340 represents a resulting power output of the wind turbine [kW] based on the measurement scenario.

An ordinate 352 of a graph 350 represents an actual rotor speed [rpm] of the wind turbine based on the measurement scenario.

An ordinate 362 of a graph 360 represents an actual pitch angle [deg] of the at least one monitored rotor blade.

An abscissa 331, 341, 351, 361 of each of the graphs 330, 340, 350, 360 represents the progressing monitoring time being synchronous to the time 312 of the graph 310.

According to the aforementioned exemplary assumption, the at least one rotor blade being monitored is at least partly covered with an ice-accretion. Consequently, as can be seen within a first time period 370 in Fig.3, the actual value of the blade edge frequency 311 of the blade during operation has changed to 1.05 Hz (visualized by an arrow 320).

After detection of icing at a time 371 (which is about 10:20) the wind turbine is stopped.

By stopping the wind turbine the actual value of the blade edge frequency 311 increases to 1.14 Hz (visualized by an arrow 321) which is in line with the aforementioned fact that the blade edge frequency of a rotor blade during standstill is higher than during operation.

During a following time period 372 a deicing of the at least one rotor blade is executed. In this example the deicing system does not cover more than 1/3 of the blade surface and does not clear the tip either. Thereby, according to the graph 310, the value of the blade edge frequency 311 increases from 1.14 Hz to 1.23 Hz (visualized by an arrow 322).

During a time period 373 (starting at a time around 10:50) the value of the blade edge frequency 311 doesn't change significantly, i.e. the executed deicing does not show any further success. At a time 374 (which is about 11:30), the deicing is stopped and the wind turbine is switched back to an active mode with the consequence of a reduced value of the blade edge frequency of about 1.14 Hz during operation of the wind turbine.

The reason for the difference between the actual value of the blade edge frequency (which is about 1.14 Hz) during operation after deicing and the corresponding operational value based on long term experience (which is about 1.22 Hz) is the aforementioned assumption that the deicing system does not cover the whole surface of the rotor blade, i.e. there is still some ice-accretion remaining of the blade with the consequence of a lower value of the blade edge frequency 311.

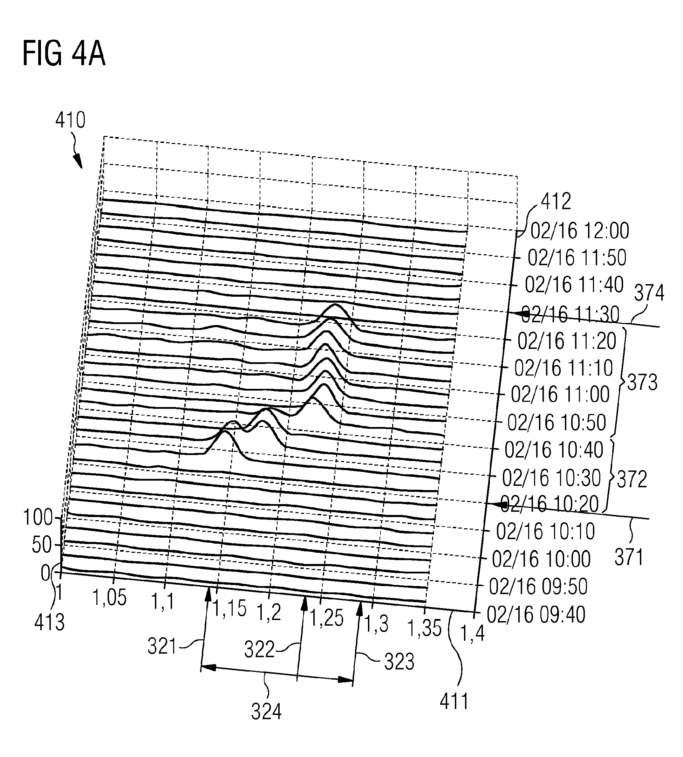

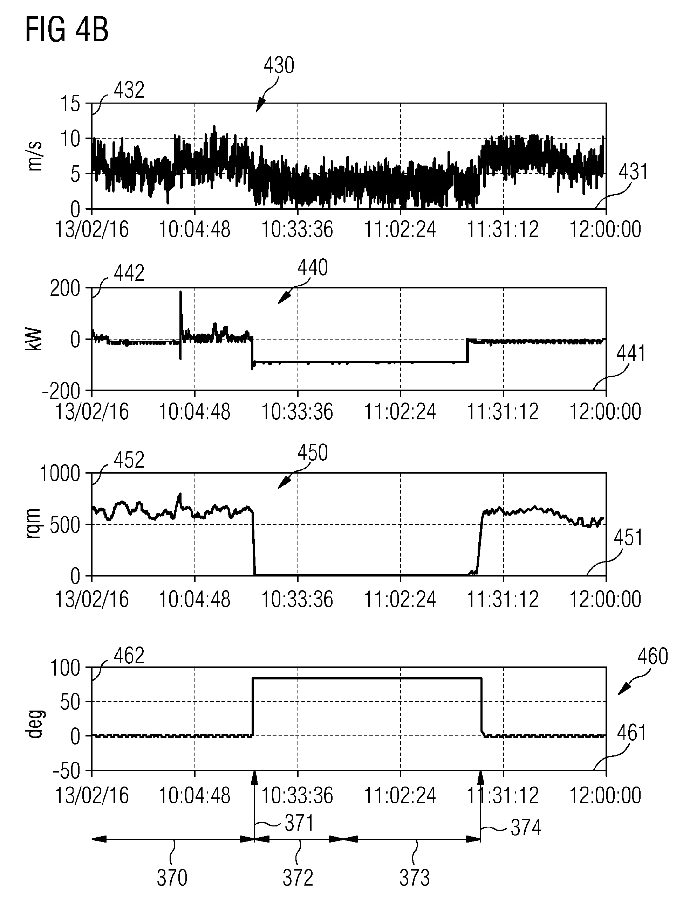

**Fig.4A and Fig.4B** both illustrate several corresponding graphs representing a further exemplary measurement scenario monitoring the same wind turbine as used in the scenario of Fig.3A,B. In contrast to Fig.3A,B the measurement scenario is now based on an accelerator (instead of using strain gauge sensors) for sensing the fore-after acceleration of the nacelle. Thereby, a graph 410 of Fig.4A illustrates a frequency spectrum based on a measurement signal provided by the accelerator.

An abscissa 411 represents the bade edge frequency, an ordinate 412 represents a progressing monitoring being synchronous to the monitoring time of the abscissa 312 of the graph 310. A further axis 413 represents a Signal-to-Noise ratio (SNR) based on the measurement signal.

An ordinate 432 of a further graph 430 of Fig.4B represents an actual wind speed [m/s] being relevant for the measurement scenario.

An ordinate 442 of a graph 440 represents a resulting power output of the wind turbine [kW] based on the measurement scenario.

An ordinate 452 of a graph 450 represents an actual rotor speed of the wind turbine [rpm] based on the measurement scenario.

An ordinate 463 of a graph 460 represents an actual pitch angle [deg] of the rotor blades of the monitored wind turbine.

An abscissa 431, 441, 451, 461 of each of the graphs 430, 440, 450, 460 represents the progressing monitoring being synchronous to the monitoring time 312 of the graph 310 and to the monitoring time 412 of the graph 410.

As can be seen out of the graph 410, the outcome of the accelerator, in particular the derived frequency spectrum based on the provided measurement signal of the accelerator doesn't show any result during the time period 370, i.e. during operation of the wind turbine as the pitch angle of the rotor blades is about 0 degree with the consequence that the edge-wise vibrations of the blades do not cause any fore-after acceleration of the nacelle and thus of the accelerator.

After stopping the wind turbine at the time 371 by pitching the blades to the stop position, i.e. using a pitch angle of about 80 degree, the edge-wise vibrations of the blades cause a fore-after acceleration of the nacelle. Consequently, a sensed signal provided by the accelerator, i.e. the frequency spectrum based on that is visible. Thereby, the sensed signal is present at a range of wind speed of about 4 to 5 m/s as visualized in the graph 430.

During the following time periods 372, 373 the deicing of the blade is executed. According to the graph 410, the sensed signal of the accelerator shows the same characteristics as the measured signal provided by the strain gauge sensor implemented in the blade (visualized in the graph 310).

In particular the increase of the value of the blade edge frequency 411 from 1.14 (as indicated by the arrow 321) Hz up to 1.23 Hz (as indicated by the arrow 322) during deicing of the blade, i.e. during the time period 372 is similar or almost equal to the graph 310.

After switching back to the operative mode of the wind turbine, no further signal is sensed by the accelerator as the pitch angle during operation is almost zero degree with the consequence that the edge-wise vibrations of the blades do not cause any fore-after acceleration of the accelerator.

Comparing Fig.3A and Fig.4A confirms a further aspect of the proposed solution being relevant during a standstill of a wind turbine:

The sensed signal provided by the accelerator of the nacelle (as shown in Fig.4A) is almost equal to the sensed signal provided by the strain gauge sensor implemented in the rotor blades (as shown in Fig.3A), in particular during standstill of the wind turbine. This allows the conclusion, that the frequency spectrum derived from the signal provided by the accelerator represents the blade edge frequency of one or more rotor blades of the wind turbine during standstill.

Based on the aforementioned aspects, the following inventive solution can be provided enabling ice detection on rotor blades during standstill of the wind turbine:

In a first step, a reference frequency value has to be predetermined representing a blade edge frequency under climatic conditions without ice based on temperatures, e.g., between 2 to 8 °C. According to the examples of Fig.3A and Fig.4A the reference frequency value of the blade under ice-free conditions during standstill of a wind turbine might be 1.28 Hz (visualized by an arrow 323 in Fig.3 and Fig.4).

In a next step, during standstill of the wind turbine, the actual blade edge frequency 311, 411 of one or more blades is monitored, e.g., by monitoring the derived frequency spectrum of the sensed signal provided by the accelerator. According to Fig.3A and Fig.4A the value of the actual blade edge frequency 311, 411 during standstill may be between 1.14 Hz (321) and 1.22 Hz (322).

During monitoring, a difference between the actual blade edge frequency value 311, 411 and the predetermined reference blade edge frequency value 323 is determined. In Fig.3A and Fig.4A the difference between the value of the actual blade edge frequency (indicated by the arrow 321) right after stopping the wind turbine (indicated by the arrow 371) and the predetermined reference blade edge frequency value 323 is exemplarily indicated by an arrow 324.

Thereby, a change of mass of at least one rotor blade is indicated, i.e. determined if the difference 324 exceeds a definable threshold. In doing so, an increase of mass is determined if the determined actual blade edge frequency value 321 is smaller than the predetermined blade edge reference frequency value 323. The increase of mass may already indicate a possible accretion of ice on the blades.

According to an optional further step, the icing of the blade is finally determined if an ambient air temperature in the environment of the wind turbine as a further criteria is below a predetermined value like, e.g., 0°.

One further aspect to be clarified for a proper realization of the proposed solution is a reasonable quantification of needed ice triggering an essential, i.e. significant change of the value of the monitored blade edge frequency. For that, tools for structural dynamic analysis may be applied.

As an example, a wind turbine blade may be modeled as a cantilever beam - accordingly, basic beam theory can be applied.

For that, a reference ice mass distribution is derived based on the standard DS/ISO 12494, thereby focusing on a glaze ice accretion modeling defining the ice mass distribution for different thicknesses of glaze ice around a circular bar.

Based on that, the leading edge of the blade can be modeled as a circular geometry. The diameter of the circular geometry and the density of ice are used as inputs of the model to calculate the ice mass distribution for different kinds of ice like, e.g., glaze, hard rime and soft rime.

According to a possible outcome of the cantilever beam model, 10 mm of ice covering 1/3 of the blade (i.e. from tip to root) should be sufficient for triggering a substantial change of the blade edge frequency.

**Predetermination of reference blade edge frequency value:**

In the following, an exemplary possibility is provided for determining or estimating the reference blade edge frequency value 323.

The reference blade edge frequency 323 may be defined as the average of a number of estimated samples of blade edge frequency values which may be derived from different blades of the wind turbine and which may not be separated sufficiently during complete standstill of the wind turbine.

Such values or samples of the reference blade edge frequency may be determined individually for each operational state. During standstill of the wind turbine the operational state requires the pitch angle to be greater than a definable threshold (PitchMin) which may be, e.g., PitchMin = 73 degrees.

The samples shall be collected at defined ambient temperatures (which may be, e.g., between Tmin and Tmax) wherein the position (PitchPos) of the pitch should be

$$PitchPos > PitchMin.$$

The accumulation of samples (reference frequency sample count) is ongoing as long as the number of the samples (Nsamples) is below a given limit:

$$reference\ frequency\ sample\ count = Nsamples < limit$$

The value of the reference blade edge frequency (IceRefFreq) 323 is determined by dividing the accumulated values of the samples (sample sum) by the number of samples

$$IceRefFreq = sample\ sum\ /Nsamples$$

after the following condition is true:
the reference frequency sample count >= Nsamples:

**Determining the actual blade edge frequency:**

One possible method to determine or estimate the actual blade frequency 311, 411 is to identify the highest peak of a power spectrum comprising the blade frequency in the edgewise direction. To avoid noisy peaks, the power spectrum can be smoothened.
As an example, Gy(t) may be the provided nacelle accelerometer time signal in fore/after direction and Gy(f) is the Fourier transform of Gy(t). Using the iFFT (inverse FFT) of the power spectrum defines the autocorrelation, Ryy(t).

$$Ryy(t) = iFFT(\ |Gy(f)|\string^2)$$

By applying a window (e.g. Hanning, Bartlett or others) multiplied with the autocorrelation together with a Fourier transformation back into the power spectrum results in a smoothened spectrum Syy(f):

$$Syy(f) = FFT(Ryy(t)*han(t))$$

A smoothing factor can be defined by the FFT resolution and the number of samples applied in the autocorrelation multiplied by the window.
To further improve the SNR it may be beneficial to use ensemble averaging on a series of spectrums thereby eliminating noisy peaks. As an example, such an ensemble averaging would be based on the last five frequency spectrums.
A simple peak detection algorithm can be applied within a defined interval between fmin and fmax to identify the frequency with the highest peak representing the actual blade edge frequency value 311, 411.
By calculating a new power spectrum at a definable rate based on the data already derived it is possible to create a compromise between "stability" and "rise time", e.g. based on the resulting noise in the data and based on targeted time to detect changes in blade edge frequencies.
An example for the rate calculating a new power spectrum would be 60 seconds. An example for the time enabling detection of changes would be 15 minutes.

**Ice detection:**

According to one possible embodiment of the proposed solution, an icing of the at least one rotor blade would

**EP 3 009 673 A1**

be detected during standstill of the wind turbine if the actual value (F_avg) of the blade edge frequency 311, 411 (which may be the result of an ensemble averaging) added by the definable threshold (Threshold) is smaller than the predetermined reference blade edge frequency value 323 (IceRefFreq):

$$F\_avg + Threshold < IceRefFreq$$

Thereby, the suggested monitoring of icing may be applicable if the following conditions are true:

- The reference blade edge frequency value 323 has been predetermined,
- The ambient temperature is below, e.g., 5° Celsius,
- The pitch angle is more than PitchMin, i.e. the operational mode of the wind turbine is "standstill" or "idle".

The proposed solution has the following advantages:

Observing or monitoring the actual blade edge frequency directly based on the tower or nacelle fore-after acceleration allows the configuration of a simple and robust monitoring or control system which can be implemented in all existing or future wind turbines, e.g., via software update.

Further, the risk of ice shedding can be minimized. The proposed solution allows the detection of ice accretion on the rotor blades during standstill of a wind turbine with high reliability which might be a highly demanded feature in the near future - in particular in countries which will have such a system as a requirement. As the proposed solution is based on an existing sensor, an implementation is possible by merely installing new software or a software update.

An advanced embodiment of the proposed solution may allow an optimized start-up of the wind turbine with blades covered with ice. Usually, under such conditions, the wind turbine cuts in and out repeatedly as the turbine controller demands too much torque for the decreased aerodynamic performance of the blade. Consequently, a more advanced start-up strategy may be implemented based on the proposed solution comprising a possible ice detection system thereby eliminating the aforementioned disadvantages.

A further development of the proposed solution may allow the implementation of a smart control of the deicing. According to an exemplary embodiment, the deicing process may be controlled dependent from the actual value of the determined blade edge frequency during standstill of the wind turbine. Thereby, if the value of the blade edge frequency doesn't show any increase during the deicing process, e.g., for a definable period of time, the deicing process will be stopped.

Although the invention is described in detail by the embodiments above, it is noted that the invention is not at all limited to such embodiments. In particular, alternatives can be derived by a person skilled in the art from the exemplary embodiments and the illustrations without exceeding the scope of this invention.

**Claims**

1. A method to operate a wind turbine (100) during standstill, comprising the steps

   - determining an actual blade edge frequency (311, 412) of at least one rotor blade (135) during standstill of the wind turbine (100),
   - comparing the determined blade edge frequency (311, 411) with a predetermined reference frequency (323),
   - monitoring a change of mass of at least one of the at least one rotor blade (135) based on the result of the comparing.

2. The method according to claim 1, wherein

   - the result of the comparing is based on a determined difference (324) between the actual blade edge frequency (311, 411) and the reference frequency (323), and
   - the change of mass is determined if the difference exceeds (324) a definable threshold.

3. The method according to claim 1 or 2, wherein the actual blade edge frequency is determined based on sensing vibrations of the wind turbine.

8

4. The method according to claim 3, wherein the actual blade edge frequency is determined based on a frequency analysis of the sensed vibrations.

5. The method according to claim 3 or 4, wherein

- the at least one rotor blade is essentially pitched to a stop position,
- the sensing of vibrations is based on measurements of an accelerometer arranged at a component of the wind turbine.

6. The method according to claims 3 or 4, wherein the sensing of vibrations is based on sensing strain in an edgewise direction and/or flap-wise direction at at least one of the at least one rotor blade.

7. The method according to any of the preceding claims 2 to 6, wherein an increase of mass of the at least one rotor blade is determined if the determined actual blade edge frequency is smaller than reference frequency.

8. The method according to claim 7, wherein the increase of mass is caused by an accretion of ice covering at least a part of the at least one rotor blade.

9. The method according to claim 8, wherein the accretion of ice is determined if an ambient air temperature of the wind turbine is below a predetermined value.

10. The method according to claim 8 or 9, comprising the step of performing a deicing of at least a part of the at least one rotor blade after determination of the accretion of ice.

11. The method according to claim 10, comprising

- determining the actual blade edge frequency of the at least one rotor blade during the deicing,
- stopping the deicing if no further substantial change of the actual blade edge frequency is determined.

12. A wind turbine, comprising a processing unit that is arranged for

- determining an actual blade edge frequency (311, 411) of at least one rotor blade (135) during standstill of the wind turbine (100),
- comparing the determined blade edge frequency (311, 411) with a predetermined reference frequency (323),
- monitoring a change of mass of at least one of the at least one rotor blade (135) based on the result of the comparing.

13. A control device comprising and/or being associated with a processor unit and/or hard-wired circuit and/or a logic device that is arranged such that the method according to any of the preceding claims 1 to 11 is executable thereon.

14. A computer program product directly loadable into a memory of a digital computer, comprising software code portions for performing the steps of the method according to any of the claims 1 to 11.

15. A computer readable medium, having computer-executable instructions adapted to cause a computer system to perform the steps of the method according to any of the claims 1 to 11.

FIG 1

100

110

140

130

135

135

120

FIG 2

## FIG 3A

# FIG 3B

FIG 4A

## FIG 4B

Europäisches
Patentamt

European
Patent Office

Office européen
des brevets

# EUROPEAN SEARCH REPORT

**Application Number**

EP 14 18 9066

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/195657 A1 (LAURITSEN STEEN M [DK] ET AL) 1 August 2013 (2013-08-01) * paragraphs [0013], [0016], [0046] - [0053], [0070], [0071], [0087]; claims 1,2,10 * | 1-15 | INV. F03D11/00 F03D7/02 |
| X,D | WO 2011/127990 A2 (SIEMENS AG [DE]; EGEDAL PER [DK]; LAURBERG HANS [DK]) 20 October 2011 (2011-10-20) * page 9, lines 30-37 * * page 13, line 9 - page 15, line 4 * * page 17, line 10 - page 18, line 17 * | 1-5,7-15 | |

TECHNICAL FIELDS
SEARCHED      (IPC)

F03D

The present search report has been drawn up for all claims

| Place of search | Date of completion of the search | Examiner |
|---|---|---|
| The Hague | 30 March 2015 | Król, Marcin |

EPO FORM 1503 03.82 (P04C01)

## ANNEX TO THE EUROPEAN SEARCH REPORT
## ON EUROPEAN PATENT APPLICATION NO.

EP 14 18 9066

This annex lists the patent family members relating to the patent documents cited in the above-mentioned European search report.
The members are as contained in the European Patent Office EDP file on
The European Patent Office is in no way liable for these particulars which are merely given for the purpose of information.

30-03-2015

| Patent document cited in search report | Publication date | Patent family member(s) | | Publication date |
|---|---|---|---|---|
| US 2013195657 A1 | 01-08-2013 | CA | 2803481 A1 | 05-01-2012 |
| | | EP | 2588752 A2 | 08-05-2013 |
| | | US | 2013195657 A1 | 01-08-2013 |
| | | WO | 2012000509 A2 | 05-01-2012 |
| WO 2011127990 A2 | 20-10-2011 | CA | 2795987 A1 | 20-10-2011 |
| | | CN | 102834610 A | 19-12-2012 |
| | | EP | 2531724 A2 | 12-12-2012 |
| | | US | 2013031966 A1 | 07-02-2013 |
| | | WO | 2011127990 A2 | 20-10-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011127990 A